# FASCICULE DE BREVET EUROPEEN

(11) **EP 2 844 846 B1**
(45) Date de publication et mention de la délivrance du brevet: **31.10.2018**
(21) Numéro de dépôt: 13725408.2
(22) Date de dépôt: 02.05.2013
(51) Int. Cl.: B25B 21/00, F01D 25/28, B25B 13/10, B25B 13/48, F02C 7/20

(54) **OUTILLAGE DE DÉVISSAGE D'UN ÉCROU DE LIAISON D'UN ROTOR DE MODULE DE MOTEUR À TURBINE À GAZ**
WERKZEUG ZUM LÖSEN EINER VERBINDUNGSMUTTER EINES ROTORS EINES MODULS FÜR EIN GASTURBINENTRIEBWERK
TOOL FOR LOOSENING A CONNECTING NUT OF A ROTOR OF A MODULE FOR A GAS-TURBINE ENGINE

(30) Priorité: 02.05.2012 FR 1254027
(43) Date de publication de la demande: 11.03.2015
(73) Titulaire: Safran Aircraft Engines, 75015 Paris (FR)
(72) Inventeur: TAILPIED, Fabrice, 77550 Moissy-Cramayel (FR)
(74) Mandataire: Gevers & Orès
(86) Numéro de dépôt international: PCT/FR2013/050976
(87) Numéro de publication internationale: WO 2013/164549

(56) Documents cités:
- EP-A1- 0 987 457
- FR-A1- 2 857 708
- FR-A1- 2 963 062
- US-A- 2 852 652

## Description

### DOMAINE TECHNIQUE DE L'INVENTION

Lors du démontage d'un moteur à turbine à gaz, notamment le démontage de l'écrou de liaison à un palier du rotor haute pression dans un turboréacteur à double corps et à soufflante avant, l'outillage de démontage de l'écrou de liaison selon la présente invention est utilisé.

### ETAT DE LA TECHNIQUE

Un turboréacteur à double corps et à soufflante avant comprend deux rotors coaxiaux supportés par des paliers logés dans les moyeux de deux éléments de carter structuraux : désignés dans le domaine carter intermédiaire et carter d'échappement. A l'avant du moteur, les paliers sont montés dans le carter intermédiaire et à l'arrière un ou plusieurs paliers sont logés dans le carter d'échappement. Dans un moteur tel que le CFM56, les ensembles tournants sont ainsi montés sur cinq paliers : trois à l'avant et deux à l'arrière. A l'avant, l'arbre de soufflante et l'arbre du rotor basse pression, BP, sont montés respectivement dans les deux premiers paliers. Le rotor à haute pression, HP, est supporté par le palier N°3, en aval des deux premiers. A l'arrière, ce même rotor HP est supporté par un palier inter-arbre et l'arbre du rotor BP est supporté par un palier monté dans le moyeu du carter d'échappement.

Chaque moteur, après une période de fonctionnement, est envoyé à l'atelier pour une révision complète par exemple, où il est démonté entièrement et où chaque pièce est nettoyée, réparée ou bien remplacée le cas échéant. Le démontage comprend plusieurs étapes dont celle du module de turbine BP à l'arrière puis celle du module constitué par le corps HP. Le rotor du corps HP comprend un tourillon à l'amont qui est retenu dans le palier N°3 par un écrou de liaison qu'il faut dévisser. Cette opération présente en soi une certaine difficulté en raison de la position centrale de l'écrou dans le moteur et de la faible accessibilité de cette pièce. L'écrou de liaison est une pièce cylindrique, filetée, dont la fonction est d'immobiliser l'extrémité amont en forme de tourillon du rotor HP par rapport à la bague interne du roulement à billes du palier. Cet écrou comprend quatre dents découpées dans la paroi cylindrique, et situées dans le prolongement amont de la partie filetée.

La procédure standard passe par le démontage du module de turbine BP à l'arrière et l'extraction de l'arbre BP par l'arrière également. On accède à l'écrou de liaison par le passage central, libéré par l'arbre BP. Après mise en place d'un dispositif de calage se substituant au palier qui a été enlevé et d'un tube de guidage des outils, un outil de forme appropriée, pourvu de deux ergots escamotables en extrémité d'un tube cylindrique est introduit dans ce passage jusqu'au niveau de l'écrou puis les deux ergots sont déployés radialement de manière à ce qu'ils viennent en prise contre deux des quatre dents de l'écrou. Le rotor HP étant immobilisé en rotation par une cale, la rotation de l'outil autour de son axe permet le dévissage de l'écrou.

Cette opération est délicate dans la mesure où il ne faut pas endommager les dents de l'écrou de liaison ni déformer ce dernier. Les directives du constructeur de la machine prescrivent l'application d'un couple maximum dans ce but.

Si l'écrou ne peut être dévissé par ce moyen, la procédure consiste alors à démonter l'ensemble de la soufflante avec le compresseur à basse pression pour avoir accès à l'écrou de liaison par l'avant du moteur. Une fois cet accès dégagé, un outil de forme appropriée est introduit le long de l'axe du moteur jusqu'à atteindre l'écrou. La tête de l'outil est adaptée à la forme de l'ensemble des dents de l'écrou ce qui permet d'appliquer un couple plus important que précédemment et augmenter les chances de parvenir à le desserrer. Cependant, si l'écrou de liaison ne peut toujours être extrait par cette opération, il est alors nécessaire de le couper. On cherche à éviter la découpe de l'écrou qui est onéreuse, car non seulement il faut remplacer ce dernier mais les copeaux et la limaille produits risquent de venir polluer l'engrenage situé dans l'environnement immédiat ce qui impliquerait un démontage et un nettoyage de ces pièces. Cet engrenage, désigné IGB, a pour fonction d'entrainer le bras radial relié à la boîte d'engrenages, AGB, supportant les accessoires.

Avec l'augmentation de la durée ou du nombre de cycles de fonctionnement des moteurs, et l'utilisation de ceux-ci, le cas échéant, dans un environnement agressif, on constate que le démontage conduit maintenant plus souvent à la découpe de l'écrou en raison du grippage de l'écrou.

Le grippage de l'écrou de liaison est dû à plusieurs facteurs :
- Cokéfaction de la graisse résultant d'un échauffement de la pièce,
- Déformation de l'écrou au desserrage, due aux efforts de torsion générés par le dépassement de la limite du couple toléré,
- Oxydation des parties de l'écrou formant les pistes de centrage avec le tourillon et la bague interne du roulement du palier.

Le document FR 2 857 708 décrit un dispositif de fixation d'un arbre de moteur sur un support de palier.

Le présent déposant s'est fixé comme objectif la mise au point d'un outillage de démontage d'un moteur, évitant autant que possible d'en venir à la découpe de l'écrou.

### EXPOSE DE L INVENTION

La présente invention concerne un outillage de dévissage de l'écrou de liaison d'un rotor d'un module de moteur à turbine à gaz selon la revendication 1. Un turboréacteur à double corps et à double flux comporte une soufflante avant, un carter intermédiaire, un module HP avec un rotor HP, et un module de turbine BP. Le carter intermédiaire ayant un palier support du rotor HP, ce dernier est retenu dans le palier par un écrou de liaison. Le procédé de démontage du moteur comporte une étape d'introduction d'un outil de dévissage de l'écrou de liaison après avoir dégagé l'accès à l'écrou, et une étape de chauffage préalable de l'écrou avant la mise en place de l'outil de dévissage.

Un chauffage préalable à température modérée permet de ramollir les huiles cokéfiées collant ensemble le filetage de l'écrou à celui du tourillon et aussi de permettre une dilatation différentielle entre les éléments cylindriques en contact l'un avec l'autre et dont les portées sont ajustées serrées. La température est maintenue en dessous d'une valeur de sécurité pour la tenue des pièces en présence. La température maximale de chauffage pour un exemple de mise en oeuvre du procédé est de 130°C.

Après avoir chauffé l'écrou, on introduit un outil de dévissage arrière par le passage libéré par le module de turbine BP.

Lors du dévissage de l'écrou de liaison du rotor HP au carter intermédiaire par l'arrière du moteur, le procédé met en oeuvre un outil de dévissage comportant un tube et une pluralité de doigts escamotables entre une position où ils sont logés dans le tube et une position où ils sont déployés radialement. Ledit outil est mis en place de manière à ce que les doigts escamotables soient déployés pour venir en contact latéral avec toutes les dents de l'écrou, et qu'un couple de rotation de dévissage est exercé sur l'outil.

On applique notamment un couple de dévissage sur l'outil de manière à ce que le couple soit maintenu à une valeur inférieure à celle où les efforts sur les dents de l'écrou de liaison risqueraient de les endommager. Grâce à la répartition des efforts sur l'ensemble des dents, il est ainsi possible d'augmenter le couple appliqué sur l'écrou, sans risquer soit de déformer les dents soit d'ovaliser la pièce cylindrique en raison de la concentration des efforts en deux zones diamétralement opposés.

L'invention porte sur l'outillage de dévissage ; il comprend un élément tubulaire pourvu d'une pluralité de doigts, mobiles radialement entre une position où ils sont escamotés à l'intérieur de l'élément tubulaire et une position où ils déployés et susceptibles de venir en contact latéralement avec les dents de l'écrou de liaison.

L'outillage de dévissage comprend un disque transversal et mobile en rotation par rapport à l'élément tubulaire et avec des rainures radiales de guidage de doigts, et un mécanisme d'actionnement des doigts par rapport au disque transversal.

L'outillage comprend également un mécanisme d'actionnement des doigts comprenant un organe central, mobile en rotation par rapport au disque mobile, relié par des biellettes aux doigts, la rotation de l'organe central entraînant le déplacement radial des doigts par rapport au disque mobile.

Selon un mode de réalisation préféré, pour immobiliser l'élément tubulaire et permettre l'application d'un couple de dévissage sur l'outil, l'élément tubulaire comprend un frein d'immobilisation en rotation à proximité du disque supportant les doigts. L'élément tubulaire comprend des palettes mobiles radialement vers l'extérieur autour d'axes perpendiculaires à l'axe de l'élément tubulaire.

Conformément à une autre caractéristique, l'outillage comprenant un moyen de calage et de repérage axial formé de butées en saillie par rapport à une plaque transversale.

### BREVE DESCRIPTION DES FIGURES

On décrit maintenant plus en détail le procédé de démontage de l'écrou de liaison selon une mise en oeuvre donnée à titre d'exemple non limitatif, la description étant faite en référence au dessins joints en annexe et sur lesquels
La figure 1 est une représentation en coupe axiale d'un moteur auquel s'applique le procédé ;
La figure 2 est une vue en demi coupe axiale montrant in situ l'écrou de liaison au palier du rotor HP et qu'il faut démonter.
La figure 3 est une vue schématique de côté du moteur en cours de démontage ;

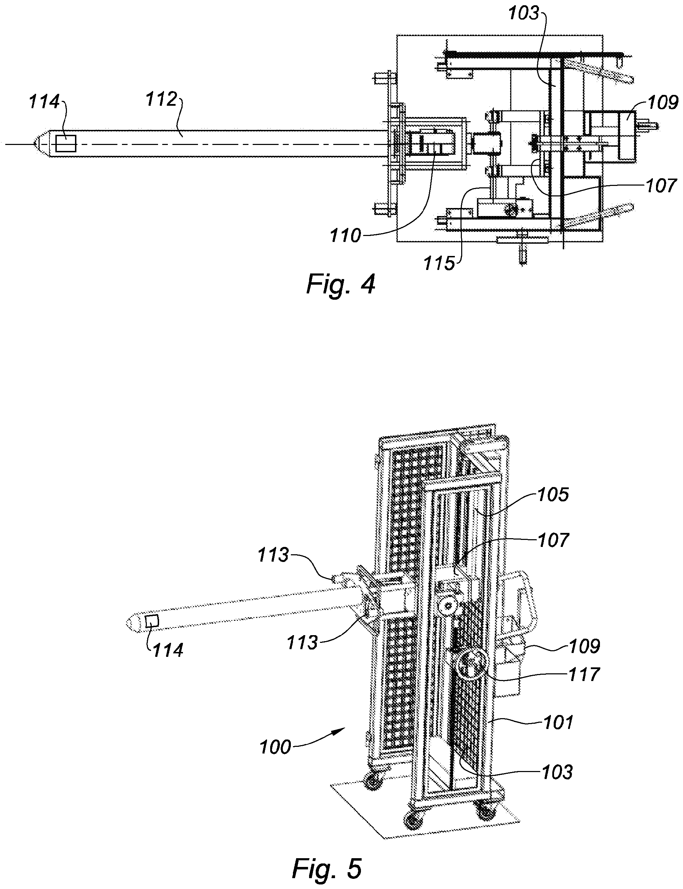

Les figures 4 et 5 représentent un exemple de réalisation du dispositif de chauffage de l'écrou ;
Les figures 6, 7 et 8 représentent un exemple de réalisation du dispositif selon l'invention de dévissage de l'écrou avec introduction par l'arrière, côté turbine ; la figure 7 étant une vue en coupe selon la direction A-A de la figure 6.
La figure 9 montre en vue isométrique l'outil de calage en rotation du rotor HP.

### DESCRIPTION DETAILLEE DE L INVENTION

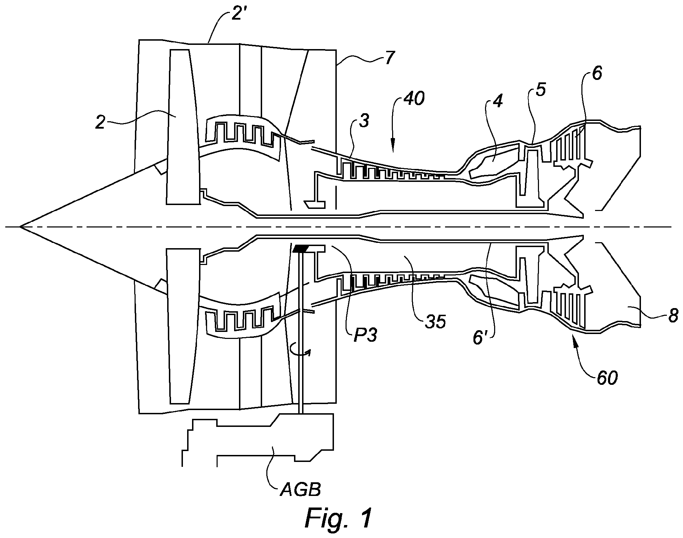

La coupe de la figure 1 représente un turboréacteur 1 à double corps et soufflante avant. De la droite vers la gauche de la figure, c'est-à-dire de l'amont vers l'aval dans le sens des flux gazeux, on distingue le rotor de la soufflante 2 à l'intérieur du carter de soufflante 2'. Le canal de soufflante délimité par le carter se divise en deux canaux annulaires concentriques, l'un pour le flux primaire traversant le moteur, l'autre pour le flux secondaire qui est éjecté sans avoir été réchauffé. Le flux primaire est comprimé dans le compresseur de gavage basse pression puis dans le compresseur HP 3. Il est admis dans la chambre de combustion 4 où il est chauffé par combustion d'un carburant. Les gaz chauds qui en sont issus sont distribués successivement dans la turbine HP 5 et la turbine BP 6 avant d'être éjectés. Les rotors sont supportés dans les deux carters structuraux que sont le carter intermédiaire 7 - auquel est fixé à l'amont le carter de soufflante - et le carter d'échappement 8 à l'arrière.

La soufflante 2 avec le compresseur de gavage et la turbine BP 6 sont reliés par un arbre de turbine BP 6'. L'arbre de turbine 6', la turbine 6 avec son carter forment avec le carter d'échappement 8, le module de turbine BP 60.

Le compresseur HP 3 et la turbine HP 5 forment le rotor HP 35 à l'intérieur du corps ou module HP 40. Celui-ci comprend également la chambre de combustion 4. Le rotor HP 35 est monté à l'amont dans le palier P3 qui est supporté dans le moyeu du carter intermédiaire 7. A ce niveau se trouve également la boite d'engrenages dite IGB pour l'entraînement de la boîte à engrenages des accessoires, dite AGB, par l'intermédiaire d'un arbre radial logé dans un bras du carter intermédiaire.

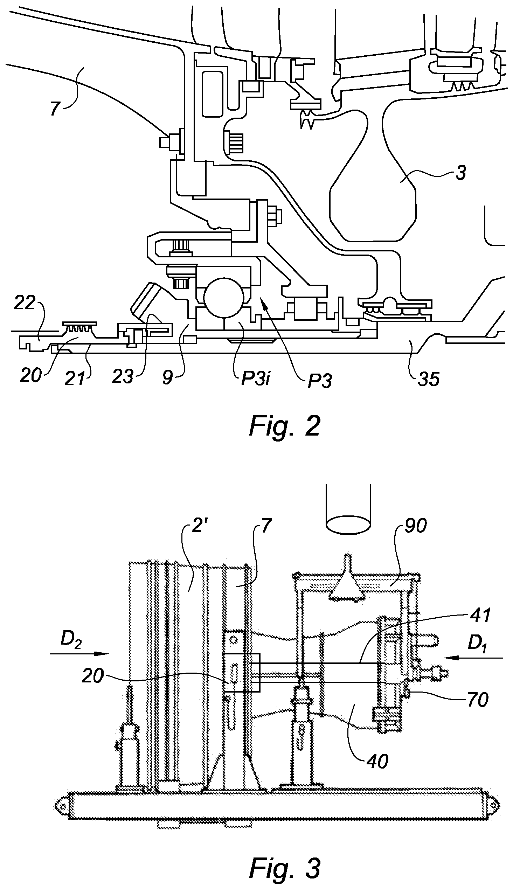

La figure 2 montre plus en détail cette partie du moteur ; l'extrémité amont du rotor 35, en forme de tourillon est logée dans la bague intérieure P3i du roulement du palier P3. La partie cylindrique du pignon 9 de l'engrenage IGB est interposée entre le rotor HP et la bague P3i. L'écrou de liaison 20 est vissé en 21 à l'extrémité du rotor 35 et immobilise axialement ce dernier par rapport au carter intermédiaire. L'écrou de liaison 20 est ainsi une pièce cylindrique avec un filetage intérieur 21, une piste de centrage extérieure 23 et des dents 22 dans le prolongement axial vers l'amont de sa paroi cylindrique. L'écrou comprend quatre dents réparties autour de son axe.

Le démontage du module HP 40 comprend la dépose préalable du module BP 60 pour libérer l'accès à l'écrou 20 et la mise en place d'un disque 70 de retenue du rotor HP dans son carter. Ce disque vient se substituer au palier inter-arbre aval qui a été enlevé avec le module BP 60. L'état du moteur est représenté schématiquement sur la figure 3. L'avant, carter de soufflante et carter intermédiaire, est fixé à un bâti et la partie arrière qui est à détacher du carter intermédiaire est le module HP 40. Il est accroché à une poutre 90 suspendue à un palan.

L'étape suivante consiste à introduire dans le tube de guidage 41 mis en place dans l'espace central libéré par l'arbre de la turbine BP, le moyen de chauffage 100 de l'écrou 20.

Ce moyen 100 est décrit ci-après.

Il comprend un chariot 101 monté sur roulettes et avec une paroi verticale 103, pourvue de rails 105 verticaux guidant une plate forme 107 mobile verticalement. La plate forme est suspendue à un filin et est reliée par un jeu de poulies à un treuil 109 à commande manuelle permettant d'en régler la hauteur. La plateforme 107 supporte l'ensemble chauffant composé d'une chaufferette 110 et d'un tube creux 112. La chaufferette est disposée à l'extrémité proximale du tube pour produire un flux d'air chaud dans le tube 112 creux dirigé vers son autre extrémité. Celle-ci est ouverte latéralement avec des lumières 114 découpées dans la paroi du tube 112 autour de son axe. L'ensemble chauffant comprend aussi un moyen de repérage et de calage en position du tube lorsqu'il est introduit dans le moteur. Ce moyen est formé ici de deux saillies 113 sur une plaque transversale qui coopèrent avec des encoches correspondantes ménagées sur le disque de retenue 70.

L'ensemble chauffant est monté sur la plateforme par l'intermédiaire d'un axe 115 de rotation horizontal de manière à ce qu'on puisse l'orienter dans une position verticale de rangement, où il est escamoté dans le chariot, ou bien dans une position active horizontale. La position de l'ensemble chauffant est commandée par un volant 116 disposé latéralement sur le chariot Un mécanisme approprié transmet le mouvement de rotation du volant à la rotation de l'ensemble chauffant autour de l'axe horizontal 115

Pour chauffer l'écrou de liaison 20, on place le chariot face au moteur dans l'axe de celui-ci. L'élément de chauffage est mis à l'horizontale et introduit dans le tube de guidage 41 jusqu'à ce que les saillies 113 viennent en butée dans leur logement respectif ménagé dans le disque de retenue 70. L"extrémité du tube est alors à la hauteur de l'écrou On met la chaufferette en fonction et l'air chaud est insufflé au travers des lumières 114 du tube en direction de l'écrou. On contrôle la montée en température de l'écrou, elle ne doit pas dépasser 130°C. Lorsque la température est atteinte, la chaufferette est désactivée et le chariot retiré et remisé.

La seconde étape vise le dévissage de l'écrou de liaison avec introduction de l'outillage 200 depuis la turbine, à l'arrière, dans le tube de guidage 41. On utilise à cet effet un outillage de dévissage comportant un tube de dévissage à l'extrémité duquel sont montés quatre doigts escamotables entre une position rentrée à l'intérieur dudit tube permettant le déplacement du tube le long de l'espace tubulaire interne 41 et une position déployée où ils s'étendent radialement hors de la paroi cylindrique du tube de dévissage. Dans cette dernière position et en appliquant un couple de rotation autour de l'axe du tube, les quatre doigts sont en appui contre un bord latéral de chaque dent et leur transmettent les efforts de dévissage. En prévoyant un nombre de doigts égal à celui des dents de l'écrou, on assure une meilleure répartition des efforts qu'avec deux doigts seulement. Il s'ensuit la possibilité d'autoriser l'application d'un couple plus élevé augmentant les chances de parvenir à débloquer l'écrou.

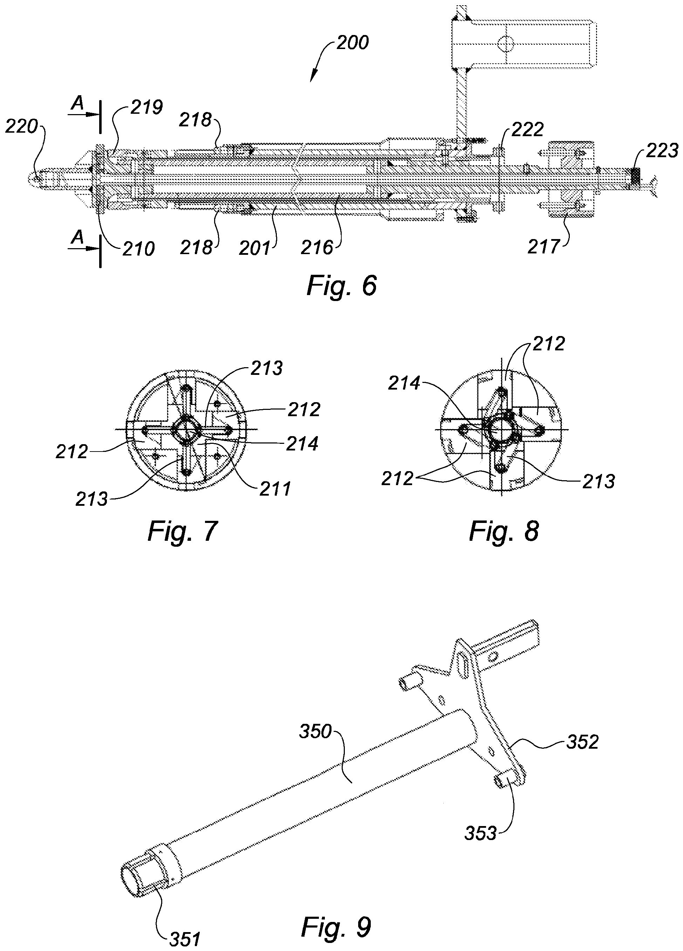

En se reportant aux figures 6 à 8, on voit en coupe un outillage selon l'invention convenant au procédé. La figure 6 représente l'outillage en coupe longitudinale. La figure 7 est une vue en coupe selon la direction AA de la figure 6, les doigts étant déployés. La figure 8 est la même vue mais les doigts étant rétractés. Cet outillage 200 comprend un élément tubulaire 201 à l'intérieur duquel est logé le mécanisme assurant le déploiement suivi de la rétraction des doigts de contact avec les dents de l'écrou.

Le mécanisme d'actionnement des doigts comprend un disque 210 disposé en travers du tube à son extrémité ; le disque présente quatre rainures 211 radiales en croix pour le logement individuel des doigts 212. Ceux-ci sont reliés à des biellettes 213 articulées à un organe d'actionnement 214, comme on le voit sur les figures 7 et 8 pour deux positions des doigts. En tournant l'organe d'actionnement sur lui-même autour de son axe, dans un sens ou dans l'autre, on fait prendre, par le jeu des biellettes, aux doigts une position rentrée ou sortie selon le sens. Le disque 210 est solidaire d'un élément tubulaire 216 entourant l'organe 214 d'actionnement des doigts. L'élément tubulaire 216 est solidaire d'une roue dentée 217 pour son entraînement en rotation. L'élément tubulaire 201 est agencé pour être rendu immobile par rapport au module HP 40. Il comprend dans ce but des saillies, ici non représentées et comme dans le moyen 100 de chauffage de l'écrou, qui coopèrent avec le disque de retenue 70. A son autre extrémité le tube est pourvu de chevilles 218 qui sont destinées à être engagées dans des rainures du tourillon de rotor HP dans le but de contribuer à empêcher toute rotation du rotor HP 35 pendant que l'on applique le couple de desserrage sur l'écrou. Le tube 201 est associé enfin à des palettes 219 mobiles radialement, actionnées par le volant 222, qui servent à extraire le frein de l'écrou 20 avant desserrage.

Un organe de guidage 220 amont est aussi représenté sur cette figure. Son diamètre est plus petit que celui du tube 201 et assure le centrage de l'outillage 200 via un outillage prévu à cet effet et monté sur la soufflante 2. Après le chauffage de l'écrou, on introduit l'outillage dans l'espace central jusqu'à ce que les saillies latérales, non représentées viennent en butée contre le dispositif 70. Le disque est alors en vis-à-vis des dents de l'écrou. Les doigts sont ensuite déployés radialement par une rotation angulaire déterminée de l'organe de commande 223. Un ou plusieurs doigts 212 présentant un aileron latéral, on imprime une rotation au disque de manière que les ailerons se glissent dans les rainures correspondantes ménagées sous les dents.

Dans la position en butée de l'outillage, on sait qu'à l'extrémité amont du tube, non visible depuis l'arrière, les chevilles axiales 218 sont engagées dans les rainures axiales correspondantes de l'intérieur du tourillon du rotor HP 35. Tout étant en position et calé, on met en place un multiplicateur de couple, tel que celui connu sous la dénomination Sweeney.

On vérifie si l'écrou est grippé au moyen d'une clé dynamométrique à cassure, calibrée sur le couple maximal autorisé. Si la clé ploie et se plie en deux, c'est que le couple maximal autorisé est dépassé et on considère que l'écrou est bloqué I faut alors tenter un dévissage par l'avant.

Si la clé ne casse pas et permet à l'écrou d'être desserré, on met en place sur le multiplicateur de couple un moteur, à air comprimé par exemple, et on procède au desserrage puis au dévissage de l'écrou.

Si le desserrage n'est pas possible en raison du grippage de l'écrou, on procède au dévissage par l'avant. Le mode de démontage de l'écrou de liaison par l'avant comprend d'abord le démontage de l'ensemble formé par la soufflante, le compresseur de gavage et les paliers P1 et P2 de manière à avoir l'écrou en vue directe par l'avant.

## Revendications

1. Outillage de dévissage de l'écrou de liaison (20) d'un rotor d'un module de moteur à turbine à gaz, comprenant un élément tubulaire (201) pourvu d'une pluralité de doigts (212), mobiles radialement entre une position où ils sont escamotés à l'intérieur de l'élément tubulaire et une position où ils sont déployés et susceptibles de venir en contact latéralement avec les dents de l'écrou de liaison, **caractérisé par le fait qu'**il comprend un disque (210) transversal et mobile en rotation par rapport à l'élément tubulaire et avec des rainures radiales (211) de guidage de doigts, et un mécanisme d'actionnement des doigts par rapport au disque transversal, ledit mécanisme d'actionnement des doigts comprenant un organe central (214), mobile en rotation par rapport au disque mobile (210), relié par des biellettes (213) aux doigts (212), la rotation de l'organe central entraînant le déplacement radial des doigts par rapport au disque mobile.

2. Outillage selon la revendication 1 dont l'élément tubulaire (201) comprend un frein d'immobilisation en rotation du rotor à proximité du disque supportant les doigts.

3. Outillage selon l'une des revendications précédentes comprenant un moyen de calage et de repérage axial formé de butées en saillie par rapport à une plaque transversale.

## Patentansprüche

1. Werkzeug zum Lösen einer Überwurfmutter (20) eines Rotors eines Moduls für ein Gasturbinentriebwerk, umfassend ein zylindrisches Element (201) das mit einer Vielzahl von Fingern (212) versehen ist, die radial zwischen einer Position, in der sie im Inneren des zylindrischen Elements eingezogen sind und einer Position beweglich sind, in der sie ausgefahren sind und geeignet sind, seitlich mit den Zähnen der Überwurfmutter in Kontakt zu treten, **dadurch gekennzeichnet, dass** es eine querliegende und in Bezug auf das zylindrische Element drehbewegliche Scheibe (210) umfasst, und mit radialen Nuten (211) zum Führen der Finger, und einen Mechanismus zum Betätigen der Finger in Bezug auf die querliegende Scheibe, wobei der Mechanismus zum Betätigen der Finger ein zentrales Organ (214) umfasst, das in Bezug auf die bewegliche Scheibe (210) drehbeweglich ist, das durch Steuerstangen (213) mit den Fingern (212) verbunden ist, wobei die Drehung des zentralen Organs eine radiale Verschiebung der Finger in Bezug auf die bewegliche Scheibe bewirkt.

2. Werkzeug nach Anspruch 1, dessen zylindrisches Element (201) eine Bremse zur Drehsicherung des Rotors nahe der Scheibe, die die Finger stützt, umfasst.

3. Werkzeug nach einem der vorstehenden Ansprüche, umfassend ein Mittel zum axialen Feststellen und Orten, das aus Anschlägen gebildet ist, die in Bezug auf eine querliegende Platte vorstehen.

## Claims

1. Tool for unscrewing a connecting nut (20) in a rotor of a gas-turbine engine module, comprising a tubular element (201) including a plurality of fingers (212), which are moveable radially between a position in which they are retracted inside the tubular element and a position in which they are deployed and are able to come into contact laterally with the teeth of the connecting nut, **characterised in that** said tool comprises a disc (210) that is transverse and rotatably movable with respect to the tubular element and with radial grooves (211) for guiding fingers, and a mechanism for actuating the fingers with respect to the transverse disc, said mechanism for actuating the fingers comprising a central member (214), rotatably movable with respect to the movable disc (210), connected by connecting rods (213) to the fingers (212), the rotation of the central member causing the fingers to move radially with respect to the movable disc.

2. Tool according to claim 1 wherein the tubular element (201) comprises a brake for locking in rotation of the rotor in the vicinity of the disc supporting the fingers.

3. Tool according to any of the preceding claims comprising an axial wedging and locating means formed of stops projecting from a transverse plate.
